# EUROPÄISCHE PATENTSCHRIFT

(11) **EP 4 325 045 B1**
(45) Veröffentlichungstag und Bekanntmachung des Hinweises auf die Patenterteilung: **22.07.2026**
(21) Anmeldenummer: 23191576.0
(22) Anmeldetag: 16.08.2023
(51) Int. Cl.: F03D 3/00, F03D 3/06

(54) **VORRICHTUNG ZUR ERZEUGUNG VON ELEKTRISCHER ENERGIE AUS WIND**
DEVICE FOR GENERATING ELECTRICAL ENERGY FROM WIND
DISPOSITIF DE PRODUCTION D'ÉNERGIE ÉLECTRIQUE À PARTIR DU VENT

(30) Priorität: 17.08.2022 DE 102022120769
(43) Veröffentlichungstag der Anmeldung: 21.02.2024
(73) Patentinhaber: Eichler, Frederic, 88718 Daisendorf (DE)
(72) Erfinder: Eichler, Frederic, 88718 Daisendorf (DE)
(74) Vertreter: Patentanwälte und Rechtsanwalt Weiß, Arat & Partner mbB

(56) Entgegenhaltungen:
- CN-A- 109 630 350
- JP-A- S5 770 961
- KR-A- 20140 068 631
- US-A1- 2013 216 379
- US-A1- 2020 392 940

## Beschreibung

### Technisches Gebiet

Die Erfindung betrifft eine Vorrichtung zur Erzeugung von elektrischer Energie aus Wind nach dem Oberbegriff des Anspruchs 1.

### Stand der Technik

Im Zuge der Nutzung erneuerbarer Energien steht die Nutzung der Windenergie neben der Solarenergie an erster Stelle. Schon von früher Menschheitsgeschichte her hat sich der Mensch die Windenergie zunutze gemacht, in dem er verschiedenste Gerätschaften, wie Mühlen oder Pumpen, mit Windenergie betrieben hat. In späterer Zeit erfolgte dann die Umsetzung der Windenergie in elektrische Energie durch Generatoren, die heute vor allem bei den Windenergieanlagen Anwendung finden. Dabei gibt es Windenergieanlagen, bei denen die Drehung eines Rotors auf ein Getriebe und von dort auf einen Generator übertragen wird, es gibt aber auch Windenergieanlagen, bei denen der Rotor selbst den drehbaren Teil des Generators darstellt.

In diesem Zusammenhang wird auf die US 2013/0216379 A1 hingewiesen, die eine Windturbine offenbart, die einen Rotor aufweist, der im Betrieb um eine Achse quer zur Strömungsrichtung des Windes drehbar ist, wobei der Rotor einen ersten Teil aufweist, der eine Vielzahl von bogenförmigen Schaufeln trägt, die wahlweise in kompakten geraden Formen oder in bogenförmigen Formen angeordnet sein können, und einen zweiten Teil, der durch zwei oder mehr Lager in einer Basisstruktur gelagert ist. Ein weiterer Aspekt des Standes der Technik offenbart einen Montagerahmen, der dazu bestimmt ist, die Turbine oder andere langgestreckte Strukturen in einer zusammengeklappten Anordnung für den Transport auf einem Anhänger zu tragen und ihre Montage und Aufstellung zu unterstützen.

Weiter wird auf die US 2020/0392940 A1 hingewiesen. Dort ist eine turmlose, vertikalachsige Windkraftanlage mit vorgespannten Rotoren offenbart. Die vorliegende Offenbarung bezieht sich ferner auf eine vertikalachsige Windturbine mit abgestützten Blattenden (z.B. Darrieus-Typ) die den mittleren Turm durch gespannte Stützen ersetzt, wie z.B. gespannte Abspannseile, und eine Blattvorspannung.

Die vorliegende Erfindung bezieht sich vor allem auf Kleinanlagen, die überall Anwendung finden können, beispielsweise auf Terrassen, Balkonen, Häusern oder auch Wohnmobilen. Im Rahmen der vorliegenden Erfindung ist vor allem an die sogenannte Darrieus Windturbine gedacht, bei der in der klassischen Form die Rotorblätter am oberen und unteren Ende einer Welle befestigt sind und bogenförmig nach außen ragen. Da die Rotorblätter oder Flügel in dieser Form erheblichen Platz beanspruchen, wird bereits daran gedacht, diese aufspreizbar bzw. aufklappbar auszugestalten. So ist zum Beispiel aus der DE 44 34 764 A1 eine Windkraftanlage bekannt, die aus wenigstens zwei rotationssymmetrisch angeordneten, untereinander und zu einer Drehachse parallel verlaufenden Rotorblättern mit Tragflügelprofilen besteht. Diese sind ausklappbar, ausschwenkbar oder ausfahrbar. Dabei behalten Sie ihre langgestreckte Form.

Ähnliches wird in der DE 10 2011 012 910 A1 gezeigt. Nach dem gleichen Prinzip funktioniert auch die Vorrichtung gemäß der DE 20 2011 002 702 U1.

Weiter wird auf die CN 109 630 350 A hingewiesen. Dort ist eine faltbare C-förmige Windturbine mit vertikaler Achse offenbart, die einen Generator umfasst, wobei ein Hebemechanismus mit dem Rotor des Generators verbunden ist, um mechanische Energie des Blattmechanismus auf den Generator zu übertragen und das Falten und Öffnen des Blattmechanismus zu realisieren, und einen faltbaren Blattmechanismus, der mit einem Hebemechanismus gekoppelt ist, um Windenergie in mechanische Energie umzuwandeln.

Auch wird auf die KR 2014 0068631 A hingewiesen, die einen Windgenerator zeigt, der ein Befestigungselement enthält, das den flexiblen Drehflügel an der Drehstange befestigt, um den Zustand beizubehalten, in dem der flexible Drehflügel gebogen ist. Die mehrfachen flexiblen Drehflügel, bei denen das andere Seitenende gegenüber dem einseitigen Ende im Ende des Drehzylinders liegt erreicht die Erhöhung entlang des Drehzylinders, wobei der Drehzylinder, bei dem der untere Teil in der Drehwelle oder der abgesenkten variablen Platte kombiniert ist, das einseitige Ende in der variablen Platte kombiniert ist, die in den Drehzylinder eingesetzt ist.

Zuletzt wird auf die JP S57 70961 A hingewiesen, die eine Vertikalachsen-Windturbine offenbart, die eine rotierende Welle und ein kreisförmiges Blatt aufweist, bei der mindestens eines der oberen und unteren Blattbefestigungsteile zur Verbindung mit der rotierenden Welle entlang der axialen Richtung der rotierenden Welle verschiebbar ist.

### Aufgabe der Erfindung

Die Aufgabe der vorliegenden Erfindung ist es, eine möglichst platzsparende Vorrichtung der o.g. Art zu schaffen, die einfach zu bedienen, aber sehr wirkungsvoll in der Winderzeugung ist.

### Lösung der Aufgabe

Zur Lösung der Aufgabe führen die Merkmale nach dem Anspruch 1.

Diese Ausgestaltung hat den wesentlichen Vorteil, dass die Flügel in einer Ruhelage bzw. zum Transport so zusammengelegt werden können, dass sie den geringst möglichen Raum beanspruchen. Sollen sie dann in eine Arbeitslage verbracht werden, werden sie so ausgefahren, dass sie dem Wind möglichst viel Widerstand entgegensetzen. Das bedeutet, dass die Flügel aus einem Werkstoff bestehen müssen, welche eine Änderung des Längsschnitts des Flügels erlaubt. Dieser Längsschnitt soll von einer Ruhelage in etwa gestreckter Form in eine Arbeitslage mit einer ausladenden Aufwölbung überführt werden können. Hierbei ist allerdings auch in Ruhelage schon daran gedacht, dass die Flügel eine geringfügige Aufwölbung aufweisen, so dass sie einer für die Arbeitslage gewünschten großen Aufwölbung möglichst geringen Widerstand entgegensetzen.

Die Zusammenfassung der Flügel geschieht bevorzugt durch eine obere und eine untere Anbindung, an welchen die Flügel auf beliebige Art und Weise festgelegt werden. Wie die Anbindung ausgestaltet ist, dürfte ebenfalls von untergeordneter Bedeutung sein. Sie müssen nur so zueinander angeordnet werden, dass ein Abstand zwischen der unteren und der oberen Anbindung veränderbar ist. Erreicht der Abstand bzw. die Distanz sein größtes Ausmaß, so sind die Flügel im Wesentlichen gestreckt und nehmen eine rohrförmige Ruhe- bzw. Transportlage ein. Wird dann der Abstand verringert, so wölben sich die Flügel nach aussen auf und erzeugen so ein ballonartiges Gebilde, welches dem Wind einen ausreichenden Widerstand entgegensetzt, so dass der Wind dieses Gebilde drehen kann.

Zur Einstellung dieses Abstandes zwischen oberer Anbindung und unteren Anbindung können beliebige Einrichtungen vorgesehen sein. Für die vorliegende Erfindung wird ein einfacher Spindelantrieb bevorzugt. Das bedeutet, dass mit einer der Anbindung eine Gewindestange und mit der anderen eine Gewindehülse verbunden ist, wobei die Gewindestange in der Gewindehülse dreht. Wird die Gewindestange und/oder die Gewindehülse gedreht, so wird der Abstand der beiden Anbindungen voneinander vergrößert oder verkleinert. Je nach dem werden die Flügel aufgewölbt oder gestreckt.

Die Betätigung des Spindelantriebs kann natürlich auf manuelle oder beliebige Art und Weise erfolgen. Im vorliegenden Ausführungsbeispiel ist hierfür ein Motor vorgesehen, der gleichzeitig auch einen Rotor für den Generator ausbildet. In diesem, allerdings nur bevorzugten Ausführungsbeispiel ist in einem Fuß, in welchem auch der Motor sitzt, ein Stator integriert, welche den Motor umfängt. Durch die Einheit aus oberer und unterer Anbindung, Flügel und Spindelantrieb, die beispielsweise über ein Planetengetriebe mit dem Motor/Rotor verbunden sind, wird bei Drehung dieser Einheit der entsprechende elektrische Strom in dem Stator erzeugt.

In einer Erweiterung der vorliegenden Erfindung ist daran gedacht, dieser Vorrichtung zur Erzeugung von elektrischer Energie aus Wind eine einfache Einrichtung zuzuordnen, mit der eine Lageveränderung der Vorrichtung von einer Transportstellung in eine Arbeitsstellung erfolgen kann. Dabei sitzt der Generator auf einem Sockel auf, welcher von einer senkrechten in eine waagrechte Stellung schwenkbar ist. Beispielsweise handelt es sich bei der waagrechten Stellung um die Ruhelage und bei der senkrechten Stellung um die Arbeitslage.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine perspektivische Ansicht einer erfindungsgemäßen Anordnung mit einer Vorrichtung zur Erzeugung von elektrischer Energie aus Wind;
Figur 2 eine Stirnansicht der Anordnung gemäß Figur 1 in Schließlage der Vorrichtung zur Erzeugung von elektrischer Energie aus Wind;
Figur 3 einen Längsschnitt durch die Anordnung gemäß Figur 2 entlang Linie A-A;
Figur 4 eine perspektivische Ansicht der Anordnung gemäß den Figuren 2 und 3;
Figur 5 eine perspektivische Ansicht der Anordnung gemäß den Figuren 2 bis 4 in Ruhe- bzw. Transportlage;

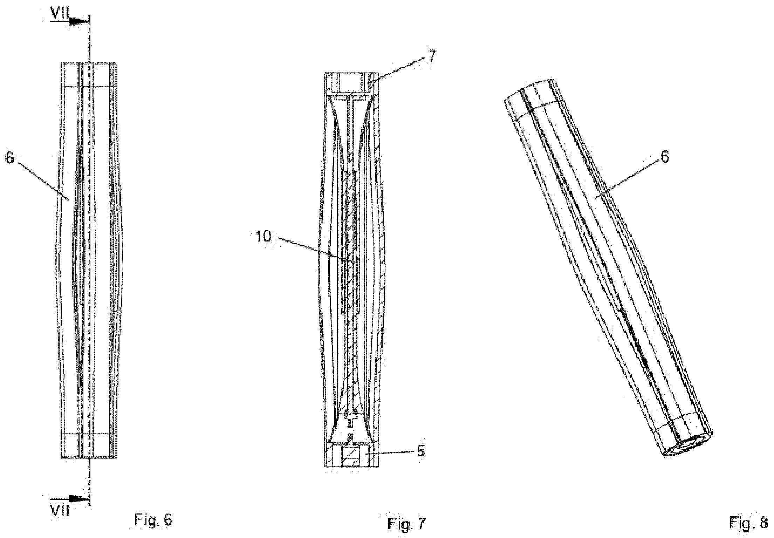

Figur 6 eine Stirnansicht eines Teils der Vorrichtung zur Erzeugung von elektrischer Energie aus Wind;
Figur 7 einen Längsschnitt durch den Teil der Vorrichtung zur Erzeugung von elektrischer Energie aus Wind gemäß Figur 6 entlang Linie VII-VII;
Figur 8 eine perspektivische Ansicht der Vorrichtung zur Erzeugung von elektrischer Energie aus Wind gemäß den Figuren 6 und 7;
Figur 9 eine Seitenansicht des Teils der Vorrichtung zur Erzeugung von elektrischer Energie aus Wind gemäß den Figuren 6 bis 8 mit aufgespannten Flügeln;
Figur 10 einen Längsschnitt durch den Teil der Vorrichtung zur Erzeugung von elektrischer Energie aus Wind gemäß Figur 9 entlang Linie X-X;
Figur 11 eine perspektivische Ansicht des Teils der Vorrichtung zur Erzeugung von elektrischer Energie aus Wind gemäß den Figuren 9 und 10;
Figur 12 eine Seitenansicht eines Flügels der Vorrichtung zur Erzeugung von elektrischer Energie aus Wind in aufgespannter Gebrauchslage;
Figur 13 eine Seitenansicht des Flügels gemäß Figur 12 in entspannter Gebrauchslage;
Figur 14 eine Seitenansicht einer Einrichtung zur Lageveränderung der Vorrichtung zur Erzeugung von elektrischer Energie aus Wind;
Figur 15 eine Stirnansicht der Einrichtung gemäß Figur 14;
Figur 16 eine perspektivische Ansicht der Einrichtung gemäß Figur 14 von unten;
Figur 17 eine perspektivische Ansicht der Einrichtung gemäß Figur 14 von oben.

### Ausführungsbeispiel

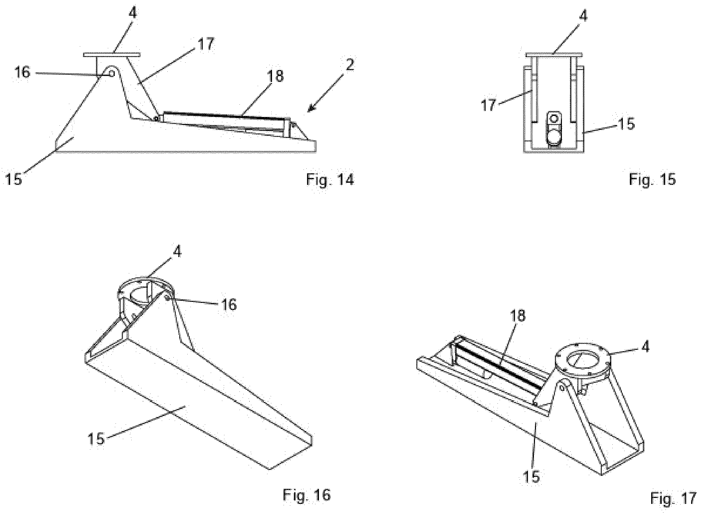

Eine erfindungsgemäße Anordnung P besteht im Wesentlichen aus einer Vorrichtung 1 zur Erzeugung von elektrischer Energie aus Wind und einer Einrichtung 2 zur Lageveränderung dieser Vorrichtung 1 von einer Transportstellung in eine Ruhe- oder Arbeitsstellung. Die Vorrichtung 1 zur Erzeugung von elektrischer Energie aus Wind ist dabei mit einem Fuß 3 auf einen Sockel 4 (siehe Figur 14 bis 17) aufgesetzt und mit diesem verbunden. Dem Fuß 3 wiederum ist eine untere Anbindung 5 zugeordnet, welche über Flügel 6 mit einer oberen Anbindung 7 gekoppelt ist.

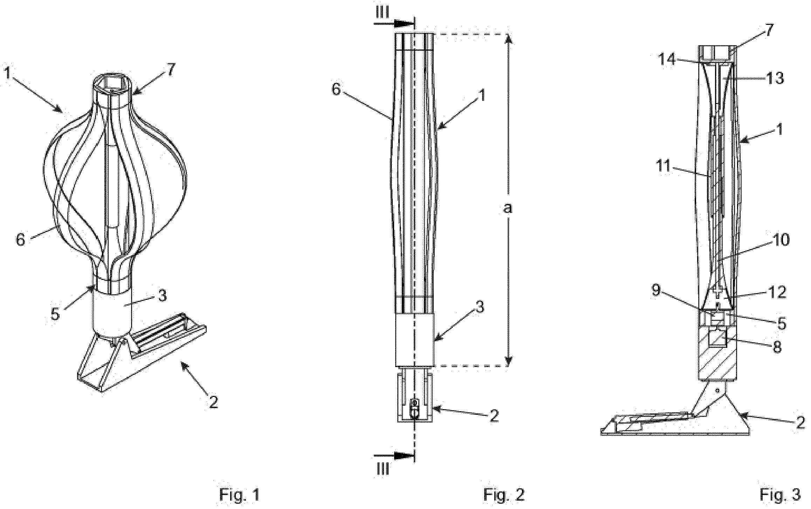

In dem Fuß 3 sitzt gemäß Figur 3 ein Motor 8, dem ein Planetengetriebe 9 zugeordnet ist. Mit diesem Planetengetriebe 9 ist eine Gewindestange 10 verbunden, die gleichzeitig auch eine Achse der Vorrichtung 1 ausbildet und über die eine Gewindehülse 11 gestülpt ist. Gewindestange 10 und Gewindehülse 11 bilden zusammen einen Spindelantrieb. Dabei wird die Gewindestange 10 in einer unteren Führung 12 geführt, während die Gewindehülse 11 von einer oberen Führung 13 nach unten ragt. Dabei sitzt die Gewindestange 10 mit einem Gewindeflansch 14 in der oberen Führung 13.

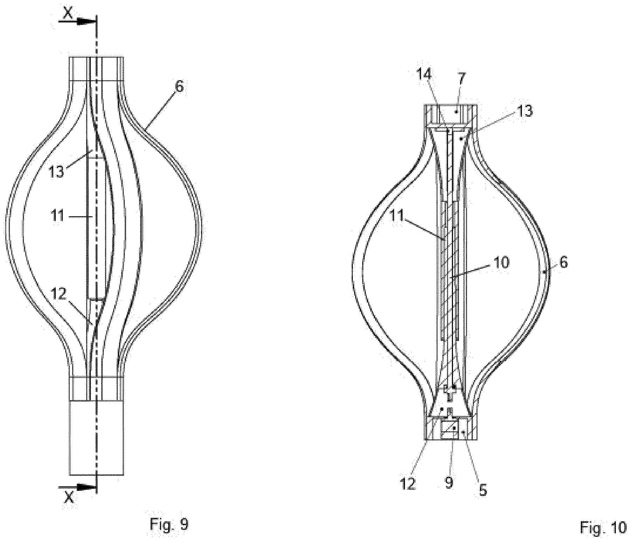

Die Funktionsweise der vorliegenden Erfindung ist folgende und wird insbesondere unter Berücksichtigung der Figuren 3 und 10 genauer beschrieben.

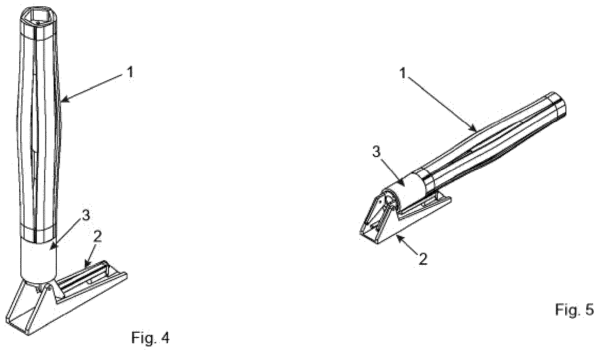

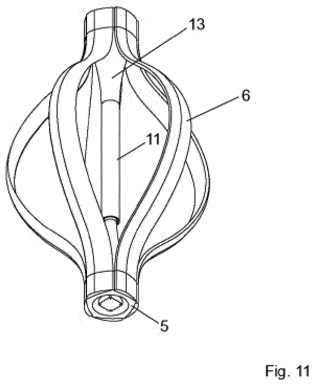

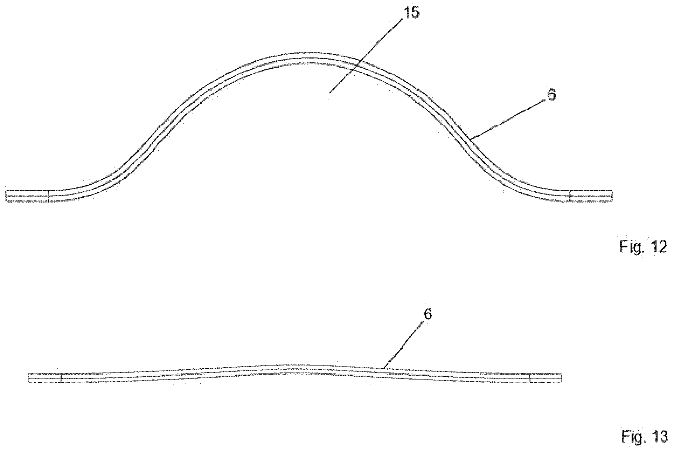

In Transport- bzw. Ruhelage befinden sich die Flügel 6 in einer entspannten Gebrauchslage, wobei die untere Anbindung 5 und die obere Anbindung 7 ihre größte Distanz A aufweisen. Um den Generator 1 in Arbeitsstellung zu bringen, wird er aus seiner Ruhelage gemäß Figur 5 in seine Gebrauchslage gemäß Figur 4 aufgerichtet. Danach wird die Gewindestange 10 in Drehung versetzt, was beispielsweise durch den Motor 8 geschehen kann. Durch die Drehung der Gewindestange 10 wird die Gewindehülse 11 und mit ihr die obere Führung 13 und die obere Anbindung 7 nach unten gezogen, so dass sich die Distanz a zwischen oberer Anbindung 7 und unterer Anbindung 5 vermindert. Hierdurch werden die Flügel 6 aufgespreizt, so dass sich eine ballonartige Ausgestaltung der Vorrichtung 1, wie in den Figuren 9 bis 11 gezeigt, ergibt. Die Flügel 6 erhalten dabei eine Aufwölbung 19, wie sie in Figur 12 dargestellt ist. Der Flügel 6 gelangt dabei von einer in Figur 13 gezeigten etwa gestreckten Ausgangslage in eine bogenförmig gewölbte Arbeitslage gemäß Figur 12. In Figur 13 ist eine geringe Wölbung des Flügels 6 erkennbar, was gewährleistet, dass einer Aufwölbung 19 der Flügel 6 ein geringstmöglicher Widerstand entgegengesetzt wird.

In dieser aufgewölbten Gebrauchslage sind die Flügel 6 dem Wind ausgesetzt und bieten eine möglichst große Angriffsfläche, so dass die Vorrichtung 1 um ihre Längsachse drehen kann. Dabei ist der Motor 8 als Rotor ausgebildet, der in dem als Stator ausgebildeten Fuß 3 dreht und dadurch elektrischen Strom erzeugt. Motor 8 und Fuß 3 bilden so insgesamt einen Generator.

Das Verbringen der Vorrichtung 1 von ihrer Ruhelage in ihre Arbeitslage geschieht durch die Einrichtung 2, wie sie in den Figuren 14 bis 17 dargestellt ist. Hierzu ist ein Montageteil 15 vorgesehen, welches eine Drehachse 16 für ein Drehteil 17 ausbildet. Auf diesem Drehteil 17 sitzt der oben beschriebene Sockel 4 auf.

Die Drehung des Drehteils 17 um die Drehachse 16 an dem Montageteil 15 geschieht über einen Linearantrieb 18, der beispielsweise ein pneumatischer oder hydraulischer Antrieb sein kann.

### Bezugszeichenliste

| | |
|---|---|
| 1 | Vorrichtung |
| 2 | Einrichtung |
| 3 | Fuß |
| 4 | Sockel |
| 5 | Untere Anbindung |
| 6 | Flügel |
| 7 | Obere Anbindung |
| 8 | Motor |
| 9 | Planetengetriebe |
| 10 | Gewindestange |
| 11 | Gewindehülse |
| 12 | Untere Führung |
| 13 | Obere Führung |
| 14 | Gewindeflansch |
| 15 | Montageteil |
| 16 | Drehachse |
| 17 | Drehteil |
| 19 | Aufwölbung |
| 20 | |
| a | Distanz |
| P | Anordnung |

## Patentansprüche

1. Vorrichtung zur Erzeugung von elektrischer Energie aus Wind, welcher Flügel (6) um eine Achse dreht, wobei diese Drehung auf einen Generator (3, 8) übertragbar ist, wobei zumindest ein Teil der Flügel (6) in ihrem Längsschnitt veränderbar sind, wobei der Längsschnitt des Flügels (6) zu einer Aufwölbung (19) veränderbar ist, wobei die Aufwölbung (19) von einem etwa waagrechten Verlauf des Längsschnitts aus erfolgt, wobei die Flügel (6) mit einer unteren und einer oberen Anbindung (5, 7) verbunden sind, wobei ein Abstand (a) zwischen der unteren und der oberen Anbindung (5, 7) veränderbar ist,
**dadurch gekennzeichnet,**
**dass** zwischen der unteren und der oberen Anbindung (5, 7) ein Linearantrieb vorgesehen ist, wobei der Linearantrieb aus einer Gewindestange (10) und einer Gewindehülse (11) gebildet ist, wobei von der unteren Anbindung (5) die Gewindestange (10) aufragt, die in der Gewindehülse (11) an der oberen Anbindung (7) dreht.

2. Vorrichtung nach Anspruch 1, **dadurch gekennzeichnet, dass** dem Linearantrieb ein Motor (8) zugeordnet ist.

3. Vorrichtung nach Anspruch **2, dadurch gekennzeichnet, dass** dem Motor (8) ein Planetengetriebe (9) zugeordnet ist.

4. Vorrichtung nach wenigstens einem der Ansprüche 1 bis 3, **dadurch gekennzeichnet, dass** der Generator (3, 8) einer der Anbindungen (5, 7) zugeordnet ist und die Drehung der Anbindung (5, 7) in elektrische Energie umwandelt.

## Claims

1. A device for generating electrical energy from wind, which rotates blades (6) about an axis, this rotation being transmissible to a generator (3, 8), wherein at least some of the blades (6) are adjustable in their longitudinal section, the longitudinal section of the blade (6) being adjustable to form a bulge (19), wherein the bulge (19) is formed from an approximately horizontal profile of the longitudinal section, wherein the blades (6) are connected to a lower and an upper connection (5, 7), wherein a distance (a) between the lower and the upper connection (5, 7) is variable,
**characterised in**
**that** a linear drive is provided between the lower and upper connections (5, 7), the linear drive comprises a threaded rod (10) and a threaded sleeve (11), wherein the threaded rod (10) extends from the lower connection (5) and rotates within the threaded sleeve (11) at the upper connection (7).

2. Device according to claim 1, **characterised in that** a motor (8) is associated with the linear drive.

3. Device according to claim 2, **characterised in that** a planetary gear (9) is associated with the motor (8).

4. Device according to at least one of claims 1 to 3, **characterised in that** the generator (3, 8) is associated with one of the connections (5, 7) and converts the rotation of the connection (5, 7) into electrical energy.

## Revendications

1. Dispositif destiné à produire de l'énergie électrique à partir du vent qui fait tourner des pales (6) autour d'un axe,
dans lequel cette rotation peut être transmise à un générateur (3, 8), au moins une partie des pales (6) sont modifiables quant à leur section longitudinale, la section longitudinale de la pale (6) est modifiable pour former un bombement (19), ce bombement (19) s'effectue à partir d'un tracé approximativement horizontal de la section longitudinale, les pales (6) sont reliées à des fixations inférieure et supérieure (5, 7), la distance (a) entre les fixations inférieure et supérieure (5, 7) est variable,
**caractérisé en ce qu'**un entraînement linéaire est prévu entre les fixations inférieure et supérieure (5, 7), l'entraînement linéaire étant constitué d'une tige filetée (10) et d'un manchon taraudé (11), la tige filetée (10) s'élevant depuis la fixation inférieure (5) et tournant dans le manchon taraudé (11) au niveau de la fixation supérieure (7).

2. Dispositif selon la revendication 1,
**caractérisé en ce qu'**un moteur (8) est associé à l'entraînement linéaire.

3. Dispositif selon la revendication 2,
**caractérisé en ce qu'**un engrenage planétaire (9) est associé au moteur (8).

4. Dispositif selon l'une au moins des revendications 1 à 3,
**caractérisé en ce que** le générateur (3, 8) est associé à l'une des fixations (5, 7) et transforme la rotation de la fixation (5, 7) en énergie électrique.
